# EUROPEAN PATENT APPLICATION

(11) **EP 4 415 012 A1**
(43) Date of publication of application: **14.08.2024**
(21) Application number: 24150185.7
(22) Date of filing: 03.01.2024
(51) Int. Cl.: H01G 4/232, H01G 4/30, H01G 4/12

(54) **MULTILAYER ELECTRONIC COMPONENT**

(30) Priority: 10.02.2023 KR 20230018108
(71) Applicant: Samsung Electro-Mechanics Co., Ltd., Gyeonggi-do (KR)
(72) Inventor: Kyeong, San, Suwon-si, Gyeonggi-do (KR); Lee, Ho Yeol, Suwon-si, Gyeonggi-do (KR); Kim, Soung Jin, Suwon-si, Gyeonggi-do (KR); Koo, Kun Hoi, Suwon-si, Gyeonggi-do (KR); Lee, Hong Bum, Suwon-si, Gyeonggi-do (KR); Kang, Bum Suk, Suwon-si, Gyeonggi-do (KR); Lee, Kyung Ryul, Suwon-si, Gyeonggi-do (KR); Chung, Hae Suk, Suwon-si, Gyeonggi-do (KR)
(74) Representative: Grünecker Patent- und Rechtsanwälte PartG mbB

(57) **Abstract**

A multilayer electronic component according to an example embodiment of the present disclosure includes: a body including a dielectric layer and an internal electrode alternately disposed with the dielectric layer; and an external electrode disposed on the body, wherein the external electrode includes an electrode layer disposed on the body and connected to an internal electrode and including Cu and glass, and an upper electrode layer disposed on the electrode layer, at least a portion of the Cu and at least a portion of the glass are disposed adjacent to the upper electrode layer, and an oxide including Cu is disposed on at least a portion of Cu and at least a portion of the glass disposed adjacent to the upper electrode layer.

## Description

### CROSS-REFERENCE TO RELATED APPLICATION(S)

This application claims benefit of priority to Korean Patent Application No. 10-2023-0018108 filed on February 10, 2023, in the Korean Intellectual Property Office, the disclosure of which is incorporated herein by reference in its entirety.

### TECHNICAL FIELD

The present disclosure relates to a multilayer electronic component.

A multilayer ceramic capacitor (MLCC), one of the multilayer electronic components, is a chip-type condenser that is mounted on the printed circuit boards of various electronic products such as imaging devices including a liquid crystal display (LCD) and a plasma display panel (PDP), computers, smartphones, and mobile phones, and serves to charge or discharge electricity therein or therefrom.

As electronics become smaller, slimmer, and multifunctional, chip components are also required to be compact, and electronic components are also mounted to become highly-integrated. In response to this trend, a space between the mounted electronic components has been minimized.

An external electrode of a multilayer electronic component may have a multilayer structure having a conductive resin layer or a plating layer further formed therein to secure characteristics such as mechanical strength, electrical conductivity, airtightness, and mountability of a multilayer electronic component, and an electrode layer in contact with the end of an internal electrode and including conductive metals such as Cu and glass as a base electrode.

In this case, on a surface of the electrode layer including the conductive metals such as Cu and glass, which is used as a base electrode layer, a portion of the conductive metal and a portion of the glass may be exposed on a surface of the electrode layer at the same time. When the plating layer is formed on the electrode layer, there may be a concern that the plating layer may not be sufficiently formed on a surface of the glass having the characteristics of nonconductors, and when a conductive resin layer is formed on the electrode layer, it may be difficult to secure sufficient adhesive force. Accordingly, the adhesion force between layers of the external electrode having a multilayer structure may be reduced, which may have a great influence on moisture resistance reliability, equivalent series resistance (ESR) characteristics, and thermal stability of multilayer electronic component.

Accordingly, in a multilayer external electrode with the electrode layer including the conductive metal and the glass as a base electrode layer, there is a need for structural improvement to improve interlayer adhesive force.

### SUMMARY

An aspect of the present disclosure is to solve a problem of deteriorating interlayer adhesive force between external electrodes in a multilayer electronic component with an electrode layer including Cu and glass as a base electrode layer.

An aspect of the present disclosure is to solve a problem in which a plating layer is not sufficiently formed on a surface of glass adjacent to a surface of an electrode layer when the plating layer is formed on the electrode layer in a multilayer electronic component with an electrode layer including Cu and glass as a base electrode layer.

An aspect of the present disclosure is to solve a problem in which it is difficult to secure adhesive force between an electrode layer and a conductive resin layer when the conductive resin layer is formed on the electrode layer in a multilayer electronic component with an electrode layer including Cu and glass as a base electrode layer.

However, the aspects of the present disclosure are not limited to the above-described contents, and may be more easily understood in the process of describing specific embodiments of the present disclosure.

According to an aspect of the present disclosure, provided is a multilayer electronic component including: a body including a dielectric layer and an internal electrode alternately disposed with the dielectric layer; and an external electrode disposed on the body; wherein the external electrode includes an electrode layer disposed on the body and connected to an internal electrode and including Cu and glass, and a plating layer disposed on the electrode layer, at least a portion of the Cu and at least a portion of the glass are disposed adjacent to the plating layer, and an oxide including Cu is disposed on at least a portion of Cu and at least a portion of the glass disposed adjacent to the plating layer.

According to another aspect of the present disclosure, provided is a multilayer electronic component including: a body including a plurality of dielectric layers and a plurality of internal electrodes alternately disposed with the dielectric layer; and at least one external electrode disposed on the body, wherein the external electrode includes an electrode layer disposed on the body and connected to the internal electrode and including Cu and glass, and a conductive resin layer disposed on the electrode layer, at least a portion of Cu and at least a portion of the glass are disposed adjacent to the conductive resin layer, an oxide including Cu is disposed on at least a portion of Cu and at least a portion of the glass disposed adjacent to the conductive resin layer.

One of the effects of the present disclosure may be to improve interlayer adhesive force of an external electrode by including an electrode layer comprising Cu and glass as a base electrode layer and disposing an oxide including Cu on at least a portion of Cu and at least a portion of glass disposed adjacent to the conductive resin layer in an external electrode structure of a multilayer electronic component .

One of the effects of the present disclosure may be to improve plating properties by disposing an oxide including Cu on at least a portion of Cu disposed adjacent to a plating layer and on at least a portion of glass when forming a plating layer on an electrode layer including Cu and glass.

Advantages and effects of the present application are not limited to the foregoing content and may be more easily understood in the process of describing a specific example embodiment of the present disclosure.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an example embodiment of the present disclosure;
FIG. 2 is a cross-sectional view taken along line I-I' of FIG. 1;
FIG. 3 is a cross-sectional view taken along line II-II' of FIG. 1;
FIG. 4 is an exploded perspective view of a body according to an example embodiment;
FIG. 5 is an enlarged view of region A of FIG. 2;
FIG. 6A is an image obtained by capturing an image of a surface of an electrode layer in a multilayer electronic component according to Comparative Example with a scanning electron microscope (SEM), and FIG. 6B is an image obtained by capturing an image of a surface of an electrode layer in a multilayer electronic component according to Inventive Example with a scanning electron microscope (SEM);
FIG. 7 is a cross-sectional view corresponding to a cross-sectional view taken along line I-I' of FIG. 1 in another example embodiment of the present disclosure; and
FIG. 8 is an enlarged view of region B of FIG. 7.

### DETAILED DESCRIPTION

Hereinafter, example embodiments of the present disclosure will be described with reference to specific example embodiments and the attached drawings. The example embodiments of the present disclosure may, however, be exemplified in many different forms and should not be construed as being limited to the specific embodiments set forth herein. Furthermore, the example embodiments disclosed herein are provided for those skilled in the art to better explain the present disclosure. In the drawings, the shapes and dimensions of elements may be exaggerated for clarity, and the same reference numerals will be used throughout to designate the same or like elements.

In addition, in order to clearly describe the present disclosure in the drawings, the contents unrelated to the description are omitted, and since sizes and thicknesses of each component illustrated in the drawings are arbitrarily shown for convenience of description, the present disclosure is not limited thereto. In addition, components with the same function within the same range of ideas are described using the same reference numerals. Throughout the specification, when a certain portion "includes" or "comprises" a certain component, this indicates that other components are not excluded and may be further included unless otherwise noted.

In the drawings, a first direction may be defined as a thickness T direction, a second direction may be defined as a length L direction, and a third direction may be defined as a width W direction.

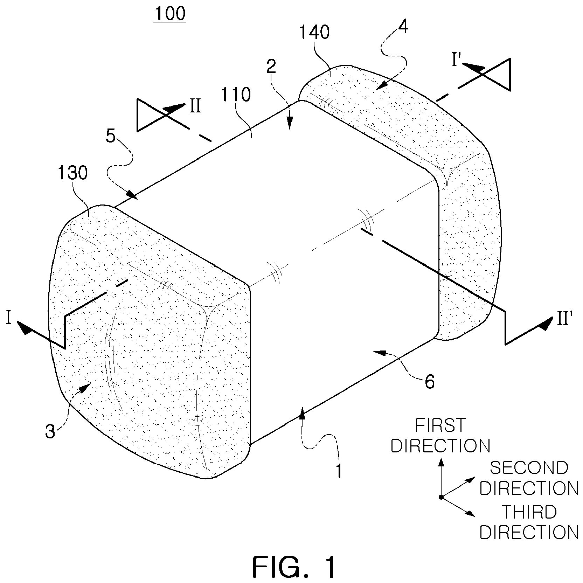

FIG. 1 is a perspective view schematically illustrating a multilayer electronic component according to an example embodiment of the present disclosure.

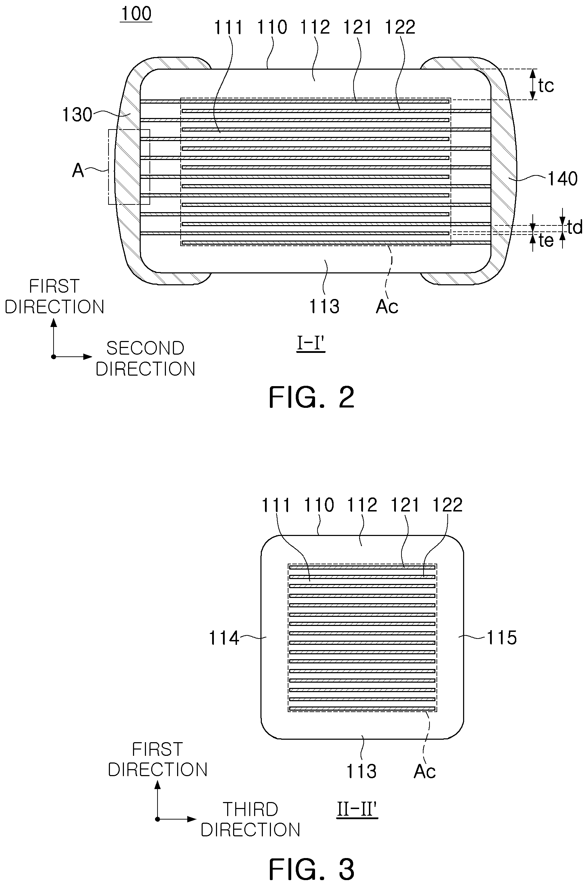

FIG. 2 is a cross-sectional view taken along line I-I' of FIG. 1.

FIG. 3 is a cross-sectional view taken along line II-II' of FIG. 1.

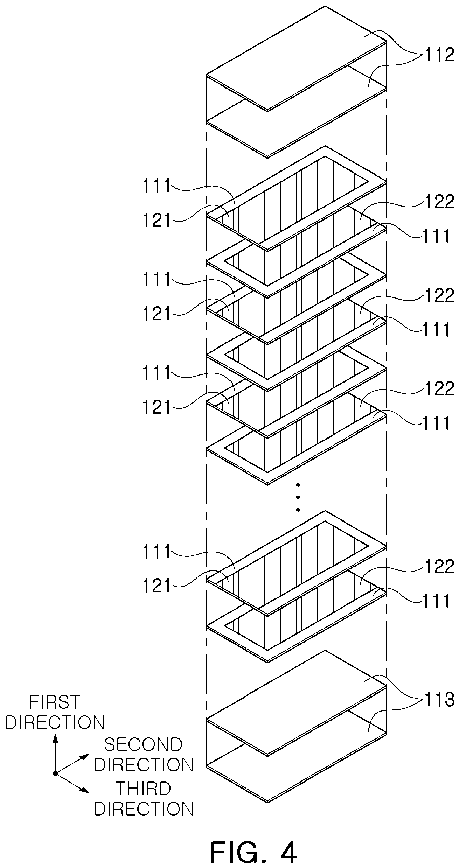

FIG. 4 is an exploded perspective view of a body according to an example embodiment.

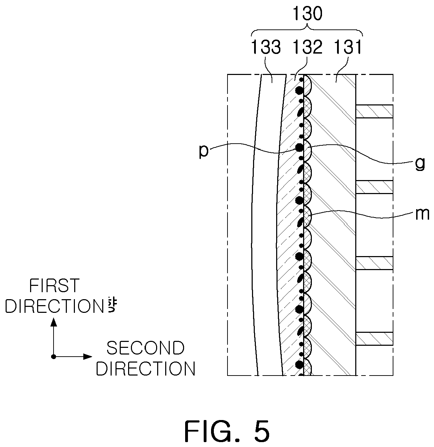

FIG. 5 is an enlarged view of region A of FIG. 2.

Hereinafter, a multilayer electronic component 100 according to an example embodiment of the present disclosure will be described in detail with reference to FIGS. 1 to 6.

A multilayer electronic component 100 according to some example embodiments of the present disclosure includes a body including a dielectric layer 111 and internal electrodes 121 and 122 alternately disposed with the dielectric layer; and external electrodes 130 and 140 disposed on the body, and the external electrodes 130 and 140 may include an electrode layer disposed on the body and connected to the internal electrode and including Cu and glass, and at least one plating layer disposed on the electrode layer. As illustrated in FIG 5, for example, the external electrode 130 may include an electrode layer 131 disposed on the body and connected to the internal electrode 132 and including Cu and glass and plating layers disposed on the electrode layer. As illustrated in FIG. 5, at least a portion of the Cu and at least a portion of the glass are disposed adjacent to the plating layer, and an oxide (p) including Cu is disposed on at least a portion (m) of Cu and at least a portion (g) of the glass disposed adjacent to the plating layer.

The body 110 includes a plurality of the dielectric layers 111 and a plurality of the internal electrodes 121 and 122 alternately disposed with the dielectric layer 111.

There is no particular limitation on a specific shape of the body 110, but as illustrated, the body 110 may have a hexahedral shape or a shape similar thereto. Due to the shrinkage of ceramic powder particles included in the body 110 during a sintering process, the body 110 is not a hexahedral shape with a completely straight lines, and may have a substantially hexahedral shape.

The body 110 may have a first surface 1 and a second surface 2 opposing each other in the first direction, a third surface 3 and a fourth surface 4 connected to the first surface 1 and the second surface 2 and opposing each other in the second direction, a fifth surface 5 and a sixth surface 6 connected to the first surface 1 and the second surface 2, connected to the third surface 3 and the fourth surface 4, and opposing each other in the third direction.

Since a plurality of dielectric layers 111 forming the body 110 are in a sintered state, a boundary between adjacent dielectric layers 111 may be integrated to the extent that boundaries therebetween may be difficult to confirm without using a scanning electron microscope (SEM).

According to some example embodiments of the present disclosure, materials for forming the dielectric layer 111 is not particularly limited as long as they can obtain sufficient capacitance. For example, a barium titanate-based material, a lead composite perovskite-based material, or a strontium titanate-based material may be used as the materials therefor. The barium titanate-based material may include BaTiO₃-based ceramic powder particles, and examples of the ceramic powder particles may include BaTiO₃, (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1) or Ba(Ti_{1-y}Zr_{y})O₃ (0<y<1) which is formed by partially employing calcium (Ca) and zirconium (Zr) in BaTiO₃, or the like

Furthermore, as the materials forming the dielectric layer 111, various ceramic additives, organic solvents, binders, dispersants, and the like, may be added to powder particles such as barium titanate (BaTiO₃) depending on the purpose of the present disclosure.

Meanwhile, an average thickness td of the dielectric layer 111 is not particularly limited. For example, the average thickness td of the dielectric layer 111 may be 0.2 um or more and 2 um or less, and the average thickness td of the dielectric layer 111 may be 0.35 um or less, in order to more easily achieve high capacitance and miniaturization of the multilayer electronic component 100.

The average thickness td of the dielectric layer 111 may denote an average thickness td of the dielectric layer 111 disposed between first and second internal electrodes 121 and 122.

The average thickness td of the dielectric layer 111 may be measured by scanning an image with a scanning electron microscope (SEM) of 10,000X magnification of a cross-section of the body 110 in a length and thickness direction (L-T). More specifically, an average value may be measured by measuring the thickness at 30 points of one dielectric layer in the scanned image, which are spaced apart from each other at equal intervals in a length direction. The 30 points spaced apart from each other at equal intervals may be designated in a capacitance formation portion Ac. In addition, when the average value is measured by extending an average value measurement up to 10 dielectric layers 111, the average thickness of the dielectric layer may be further generalized.

Referring to FIG. 2, the body 110 may include a capacitance formation portion Ac disposed inside the body 110 and having capacitance formed by including first and second internal electrodes 121 and 122 alternately disposed with the dielectric layer 111 interposed therebetween, and a first cover portion 112 and a second cover portion 113 formed in an upper portion and a lower portion of the capacitance formation portion Ac in the first direction, respectively.

Furthermore, the capacitance formation portion Ac is a portion contributing to the capacitance formation of a capacitor, and may be formed by repeatedly stacking a plurality of first and second internal electrodes 121 and 122 with the dielectric layer 111 interposed therebetween.

In an example embodiment, an upper cover portion 112 may be disposed on one surface of the capacitance formation portion Ac in the first direction, and a lower cover portion 113 may be disposed on the other surface of the capacitance formation portion Ac in the first direction.

The upper cover portion 112 and the lower cover portion 113 may be formed by stacking a single dielectric layer or two or more dielectric layers on the upper and lower surfaces of the capacitance formation portion Ac in a thickness direction, respectively, and may basically serve to prevent damage to the internal electrodes due to physical or chemical stress.

The upper cover portion 112 and the lower cover portion 113 do not include the internal electrodes, and may include the same material as the dielectric layer 111.

That is, the upper cover portion 112 and the lower cover part 113 portion may include a ceramic material, and may include, for example, a barium titanate (BaTiO₃)-based ceramic material.

Meanwhile, the average thickness of the cover portions 112 and 113 need not be particularly limited. However, in order to more easily achieve miniaturization and high capacitance of the multilayer electronic component, the average thickness tc of the cover portion 112 and 113 may be 15 um or less.

The average thickness of the cover portions 112 and 113 may denote a size in the first direction, and may be a value obtained by averaging first directional sizes of the cover portions 112 and 113 measured at five points spaced apart from each other at equal intervals in the upper portion or the lower portion of the capacitance formation portion Ac.

In some example embodiments, margin portions 114 and 115 may be disposed on one surface and the other surface of the capacitance formation portion Ac in the third direction.

Referring to FIG. 3, the body 110 may include a margin portion 114 disposed on the fifth surface 5 of the body 110 and a margin portion 115 disposed on the sixth surface 6. That is, the margin portions 114 and 115 may be disposed on both end surfaces of the body 110 in the third direction (i.e., a width direction).

As illustrated in FIG. 2, the margin portions 114 and 115 may refer to a region between both ends of the first and second internal electrodes 121 and 122 and a boundary surface of the body 110.

The margin portions 114 and 115 may basically serve to prevent damage to the internal electrodes due to physical or chemical stress.

The margin portions 114 and 115 may be formed by applying a conductive paste except for a portion in which the margin portions will be formed on the ceramic green sheet, and forming the internal electrodes.

Alternatively, in order to suppress a step portion caused by the internal electrodes 121 and 122, the internal electrodes 121 and 122 may be stacked and then cut to be connected to the fifth surface 5 and the sixth surface 6 of the body, and then, the margin portions 114 and 115 may be formed by stacking a single dielectric layer or two or more dielectric layers on both side surfaces of the capacitance formation portion Ac in the third direction.

Meanwhile, widths of the margin portions 114 and 115 need not be particularly limited. However, in order to more easily achieve miniaturization and high capacitance of the multilayer electronic component, an average width of the margin portions 114 and 115 may be 15 um or less.

The average width of the margin portions 114 and 115 may denote an average size of the margin portions 114 and 115 in the third direction, and may be a value obtained by averaging third directional sizes of the margin portions 114 and 115 measured at five points spaced apart from each other at equal intervals on a side surface of the capacitance formation portion Ac.

The internal electrodes 121 and 122 are alternately disposed with the dielectric layer 111 in the first direction.

The internal electrodes 121 and 122 may include first and second internal electrodes 121 and 122. The first and second internal electrodes 121 and 122 may be alternately disposed to oppose each other with the dielectric layer 111 forming the body 110 interposed therebetween, and may be connected to the third surface 3 and the fourth surface 4 of the body 110, respectively. Specifically, one end of the first internal electrode 121 may connected to the third surface, and one end of the second internal electrode 122 may be connected to the fourth surface. That is, in some example embodiments, the internal electrodes 121 and 122 may be in contact with the third surface 3 and/or the fourth surface 4.

As illustrated in FIGS. 2 and 3, the first internal electrode 121 may be spaced apart from the fourth surface 4 and may be exposed through the third surface 3, and the second internal electrode 122 may be spaced apart from the third surface 3 and may be exposed through the fourth surface 4. The first external electrode 130 may be disposed on the third surface 3 of the body and connected to the first internal electrode 121, and the second external electrode 140 may be disposed on the fourth surface 4 of the body and connected to the second internal electrode 122.

That is, the first internal electrode 121 is not connected to the second external electrode 140 and is connected to the first external electrode 130, and the second internal electrode 122 is not connected to the first external electrode 130 and is connected to the second external electrode 140. Accordingly, the first internal electrode 121 may be formed to be spaced apart from the fourth surface 4 by a predetermined distance, and the second internal electrode 122 may be formed to be spaced apart from the third surface 3 by a predetermined distance. In this case, the first and second internal electrodes 121 and 122 may be electrically separated from each other by the dielectric layer 111 disposed in the middle.

Referring to FIG. 4, the body 110 may be formed by alternately stacking a ceramic green sheet on which the first internal electrode 121 is printed and a ceramic green sheet on which the second internal electrode 122 is printed, and then sintering the ceramic green sheets.

A material for forming the internal electrodes 121 and 122 is not particularly limited, and a material having excellent electrical conductivity may be used for forming the internal electrodes 121 and 122. For example, the internal electrodes 121 and 122 may include at least one selected from the group consisting of nickel (Ni), copper (Cu), palladium (Pd), silver (Ag), gold (Au), platinum (Pt), tin (Sn), tungsten (W), titanium (Ti), and alloys thereof.

Furthermore, the internal electrodes 121 and 122 may be formed by printing a conductive paste for internal electrodes including at least one selected from the group consisting of nickel (Ni), copper (Cu), palladium (Pd), silver (Ag), gold (Au), platinum (Pt), tin (Sn), tungsten (W), titanium (Ti) and alloys thereof, on the ceramic green sheet. A method of printing the conductive paste for the internal electrodes may be a screen printing method, a gravure printing method, but the present disclosure is not limited thereto.

Referring to FIGS. 1 and 2, external electrodes 130 and 140 may be disposed on the body 110. The external electrodes 130 and 140 may include a first external electrode 130 disposed on the third surface 3 of the body 110, and a second external electrode 140 disposed on the fourth surface 4 of the body 110. Although the present disclosure describes a structure in which the multilayer electronic component 100 has two external electrodes 130 and 140, the number or shape of external electrodes 130 and 140 may be changed according to the shape or other purpose of the internal electrodes 121 and 122.

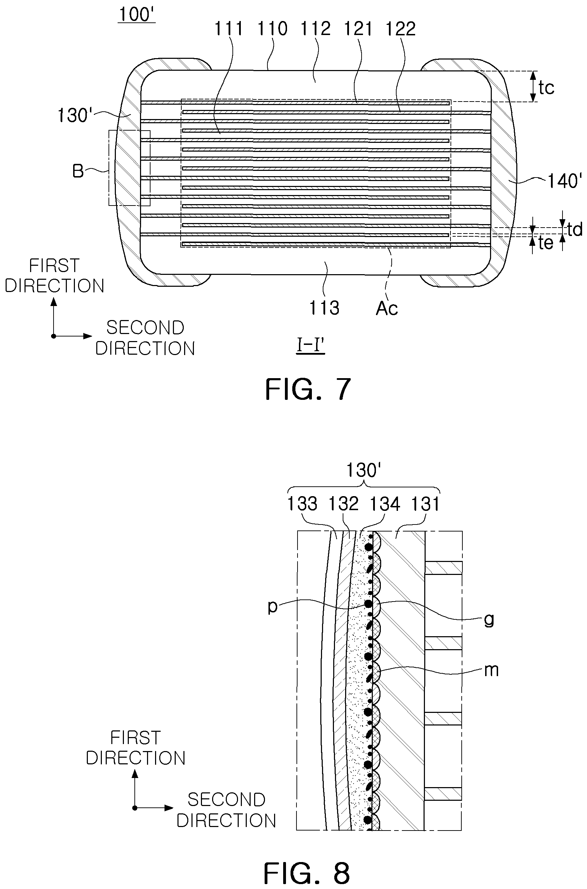

A multilayer electronic component 100 according to some example embodiments of the present disclosure and a multilayer electronic component 100' according to some example embodiments of the present invention includes a body including a dielectric layer 111 and internal electrodes 121 and 122 alternately disposed with the dielectric layer; and external electrodes 130 and 140 disposed on the body, and the external electrodes 130 and 140 may include an electrode layer disposed on the body and connected to the internal electrode and including Cu and glass, and an upper electrode layer disposed on the electrode layer. As illustrated in FIG 5 and 8, for example, the external electrode 130, 130' may include an electrode layer 131 disposed on the body and connected to the internal electrode 121 and including Cu and glass and the upper electrode layer disposed on the electrode layer. As illustrated in FIG. 5 and 8, at least a portion of the Cu and at least a portion of the glass are disposed adjacent to the upper electrode layer, and an oxide (p) including Cu is disposed on at least a portion (m) of Cu and at least a portion (g) of the glass disposed adjacent to the upper electrode layer. Accordingly, the interlayer adhesion of the external electrode can be improved.

The upper electrode layer may be in direct contact with the electrode layer. The type of the upper electrode layer is not particularly limited, and may include a conductive metal to ensure electrical connectivity with the electrode layer.

Meanwhile, A multilayer electronic component 100 according to some example embodiments of the present disclosure and a multilayer electronic component 100' according to some example embodiments of the present invention may have a case where the upper electrode layer is the plating layer 132 and 133 and a conductive layer 134, respectively. Accordingly, additional effects can be achieved in addition to the effect of improving the interlayer adhesion of the external electrodes 130, 140, 130', and 140'.

Hereinafter, the structure of the external electrodes 130 and 140 of the multilayer electronic component 100 according to some example embodiments of the present disclosure will be described in detail with reference to FIG. 5. Although FIG. 5 illustrates the structure of the first external electrode 130, the structure of the first external electrode 130 may also be similarly applied to the second external electrode 140.

A multilayer electronic component 100 according to some example embodiments of the present disclosure includes external electrodes 130 and 140 disposed on a body 110, each of the external electrodes includes an electrode layer disposed on the body and connected to the internal electrode and including Cu and glass, and plating layers disposed on the electrode layer, at least a portion of Cu and at least a portion of the glass are disposed adjacent to the plating layer disposed on the electrode layer, and an oxide (p) including Cu is disposed on at least a portion (m) of Cu and at least a portion (g) of the glass disposed adjacent to the plating layers.

Referring to FIG. 5, the external electrode 130 may include an electrode layer 131 disposed on the body 110 and connected to the internal electrodes 121 and 122.

The electrode layer 131 may include a conductive metal and glass. The type of conductive metal included in the electrode layer 131 is not particularly limited, but in some example embodiment of the present disclosure, the electrode layer 131 includes copper (Cu) as a conductive metal. Meanwhile, the glass included in the electrode layer 131 may serve to improve sintering properties of conductive powder particles included in the conductive paste, and may improve the density of the electrode layer 131 by filling pores produced in the electrode layer 131 during the sintering process. Furthermore, the glass may serve to improve adhesive force to the body 110 including ceramic materials as a main component.

A method of forming the electrode layer 131 including Cu and glass is not particularly limited. For example, the electrode layer 131 may be formed by applying and sintering a conductive paste including conductive metal powder particles such as Cu powder particles, glass, and additives to the third surface of the body 110 at which the internal electrodes 121 is exposed.

Referring to FIG. 5, plating layers 132 and 133 may be formed on the electrode layer 131. The plating layers 132 and 133 may sequentially be a plating layer 132 including Ni and a plating layer 133 including Sn. The plating layers 132 and 133 may serve to improve airtightness or mountability of the multilayer electronic component 100. A method of forming the plating layers 132 and 133 on the electrode layer 131 is not particularly limited, but electroplating may be mainly used.

When the electrode layer 131 including Cu and glass is formed by sintering a conductive paste including conductive powder particles and glass, at least a portion (m) of Cu and at least a portion (g) of the glass may be exposed to an external surface of the electrode layer 131. Since at least a portion (g) of the glass exposed on the external surface of the electrode layer 131 has properties of a nonconductor and at least a portion (m) of the glass exposed on the external surface of the electrode layer 131 has properties of a conductor, when the plating layer 132 is formed on the electrode layer 131 by electroplating, there may be a concern that the plating layer may not be sufficiently formed on at least a portion (m) of the glass exposed on the external surface of the electrode layer 131. Accordingly, the plating layer 132 may be cut off in a local area, and the airtightness and moisture resistance reliability of the multilayer electronic component 100 may be reduced.

In an embodiment of the present disclosure, an oxide p including Cu may be disposed on at least a portion (m) of Cu and at least a portion (g) of the glass disposed adjacent to the plating layer 132, thereby preventing incomplete formation of the plating layer and improving the airtightness and moisture resistance reliability of the multilayer electronic component 100.

The oxide (p) including Cu may be disposed on at least a portion (g) of the glass and at least a portion (m) of Cu exposed to the external surface of the electrode layer 131 to cover at least a portion (g) of the glass having the properties of a nonconductor, and accordingly, when the plating layer 132 is formed on the electrode layer 131, it may be possible to suppress a cutting phenomenon of the plating layer, and to improve the airtightness and moisture resistance reliability of the multilayer electronic component 100. As illustrated in FIG. 5, a structure in which the oxide (p) including Cu is disposed on at least a portion (g) of the glass and at least a portion (m) of the Cu exposed to the external surface of the electrode layer 131 may be formed to have a structure in which after the formation of the plating layer 132, at least a portion of Cu and at least a portion of the glass are disposed adjacent to the plating layer 132, and the oxide (p) including Cu is disposed on at least a portion (m) of Cu and at least a portion (g) of the glass disposed adjacent to the plating layer 132.

On the other hand, as in an example embodiment of the present disclosure, when the oxide (p) including Cu is disposed on at least a portion (m) of Cu and at least a portion (g) of the glass disposed adjacent to the plating layer 132, since the oxide including Cu has properties similar to semiconductors, there is no problem at all in securing electrical connectivity of the external electrode 130.

A method of determining a structure in which the oxide (p) including Cu is disposed on at least a portion (m) of Cu and at least a portion (g) of the glass disposed adjacent to the plating layer 132 is not particularly limited. After polishing the multilayer electronic component 100 to a central portion thereof in the third direction to expose the cross-sections thereof in the first direction and the second direction, the structure may be determined by analyzing components using Scanning Electron Microscope-Energy-Dispersive X-ray Spectroscopy (SEM-EDS) in a 5 um x 5 um area of a first directional central portion of the external electrode formed on the third or fourth surface. Specifically, a region in which a content of an oxygen element compared to a Cu element is detected as 30 at% or more may be seen as a region in which the oxide including Cu is formed.

The plating layers 132 and 133 may serve to improve mounting characteristics. The type of plating layer is not particularly limited, and may be a plating layer including at least one of Ni, Sn, Pd and alloys thereof, and may be formed of a plurality of layers.

As a more specific example of the plating layer, the plating layer may be a Ni plating layer or a Sn plating layer, and may be a form in which the Ni plating layer 132 and the Sn plating layer 133 are sequentially formed on the electrode layer 131, or a form in which the Sn plating layer, the Ni plating layer and the Sn plating layer are sequentially formed. Furthermore, the plating layer may include a plurality of Ni plating layers and/or a plurality of Sn plating layers.

In some example embodiments, the oxide (p) including Cu may be disposed in the form of particles. Accordingly, interlayer adhesive force of the external electrode 130 may be improved by improving an area in which the electrode layer 131 and the plating layer 132 come into contact with each other. The oxide (p) containing Cu may be disposed in various forms on at least a portion m of Cu and at least a portion g of glass disposed adjacent to the plating layer 132. The oxide (p) including Cu may be provided with a spherical shape, a flake shape, or particles in which the spherical shape and the flake shape are mixed. In some embodiments, the oxide (p) including Cu may include copper oxide.

In order to secure plating properties of the plating layer 132, in the oxide (p) including Cu, it may be necessary to appropriately set the content of the oxygen element compared to the Cu element. In some example embodiments, a ratio of a content of the O element to the Cu element of the oxide (p) including Cu may be 30 to 40 at%.

In an example embodiment, an average value of a maximum Feret diameter of the oxide (p) including Cu may be 100 nm to 2000 nm. Accordingly, a contact area between the electrode layer 131 and the plating layer 132 may be increased to improve adhesive force between the electrode layer 131 and the plating layer 132.

A maximum Feret diameter of the oxide p including Cu be specified using Scanning Electron Microscope-Energy-Dispersive X-ray Spectroscopy (SEM-EDS) in a 5 um x 5 um area of a first directional central portion of the external electrode formed on the third or fourth surface after polishing the multilayer electronic component 100 to a central portion thereof in the third direction and exposing the first and second directional cross sections thereof. The maximum Feret diameter may denote a maximum value of a distance between two parallel tangent lines disposed on an opposite surface of particles. The measurement of the maximum Feret diameter may be performed on the oxide p including at least five Cu to obtain an average value. The average measurement of the maximum Feret diameters may be further generalized by being repeatedly performed in three regions in which the external electrode formed on the third or fourth surface is divided into three equal portions in the first direction.

In some example embodiments, the electrode layer 131 may further include an oxide including Fe. The oxide including Fe may be included in the glass of the electrode layer 131, and may be added to a glass frit before sintering, thus oxidizing Cu and promoting the formation of the oxide (p) containing Cu of the present disclosure, and the oxide including Fe may improve the wettability of Cu and glass in the electrode layer 131, thereby improving moisture resistance reliability of a multilayer electronic component. In some embodiments, the oxide including Fe may be iron oxides.

In some example embodiments, the electrode layer 131 may further include Mg.

Mg may be added in the form of a dispersant when the electrode layer 131 is formed, and Mg may be uniformly dispersed in the electrode layer 131 after sintering. A Mg element included in the electrode layer 131 may serve to delay the sintering of the electrode layer 131 without affecting physical properties of the glass. Accordingly, adhesive force between the electrode layer 131 and the plating layer 132 may be improved.

FIG. 7 is a cross-sectional view corresponding to a cross-sectional view taken along line I-I' of FIG. 1 in another example embodiment of the present disclosure, and FIG. 8 is an enlarged view of region B of FIG. 7.

Hereinafter, referring to FIGS. 7 and 8, a multilayer electronic component 100' according to another example embodiment of the present invention will be described in detail, but descriptions overlapping the multilayer electronic component 100 according to an embodiment example of the present invention will be omitted.

Referring to FIGS. 7 and 8, a multilayer electronic component 100' according to some example embodiments of the present invention includes external electrodes 130' and 140' disposed on a body 110, the external electrodes includes an electrode layer 131 disposed on the body and connected to internal electrode 121 and including Cu and glass, and a conductive resin layer 134 disposed on the electrode layer, at least a portion of the Cu and at least a portion of the glass are disposed adjacent to the conductive resin layer 134, and an oxide (p) including Cu is disposed on at least a portion (m) of Cu and at least a portion (g) of the glass disposed adjacent to the conductive resin layer.

In another example embodiment of the present disclosure, an external electrode 130' includes an electrode layer 131 disposed on the body 110 and connected to the internal electrode 121 and including Cu and glass, and a conductive resin layer 134 disposed on the electrode layer.

The conductive resin layer 134 may include a conductive metal and a thermosetting resin, thereby improving adhesive force to the electrode layer 131 including glass, and may serve to improve bending strength, ESR characteristics, and thermal stability of the multilayer electronic component 100'.

Conventionally, in order to improve the adhesion force between the electrode layer 131 and the conductive resin layer 134, There have been attempts to add a coupling agent type additive for improving interlayer adhesive force of a resin, but when external electrodes are treated with lead heat resistance, there may be a problem that the coupling agent additive may be thermally decomposed. There is another method of roughing a surface of the electrode layer 131, but since it is difficult to selectively apply roughness only to the surface of the electrode layer 131, there may also be a problem in which damage may be applied to the body 110. Furthermore, there is a method of increasing a size of the particles of the conductive metal powder particles forming the electrode layer 131, there may be a problem that a sintering temperature may be enhanced or a degree of sintering is lowered.

Accordingly, in another example embodiment of the present disclosure, in a structure of the external electrode 130' in which the conductive resin layer 134 is disposed on the electrode layer 131 including Cu and glass, an oxide (p) including Cu may be disposed on at least a portion (m) of Cu and at least a portion (g) of the glass disposed adjacent to the conductive resin layer 134, thereby improving adhesive force between the electrode layer 131 and the conductive resin layer 134. Accordingly, by applying the conductive resin layer 134, it may be possible to remarkably improve moisture resistance reliability, flexural strength characteristics, ESR characteristics, and thermal stability of the multilayer electronic component 100'.

On the other hand, as in another example embodiment of the present disclosure, when an oxide (p) including Cu is disposed on at least a portion (m) of Cu and at least a portion (g) of the glass disposed adjacent to the conductive resin layer 134, because the oxide including Cu having properties similar to semiconductors, there may be no problem in securing an electrical connection of the external electrode 130, and when the conductive resin layer 134 includes an epoxy resin, chemical bonding of the oxide including the epoxy resin and Cu may further improve interlayer adhesive force of the external electrode 130. Accordingly, the conductive resin layer 134 may include the epoxy resin as a thermosetting resin.

Various embodiments of the multilayer electronic component 100 according to some example embodiments of the present disclosure may be applied to the multilayer electronic component 100' according to another example embodiment of the present disclosure.

Specifically, in an example embodiment, a ratio of a content of an oxygen element to a Cu element of the oxide (p) including Cu may be 30 at% or more and 40 at% or less.

In an example embodiment, an average value of the maximum Feret diameter of the oxide p including Cu may have an average value of 100 nm or more and 2000 nm or less.

In some example embodiments, the electrode layer 131 may further include an oxide including Fe. In some example embodiments, the electrode layer 131 may further include Mg.

Meanwhile, in some example embodiments applicable to the multilayer electronic component 100' according to another example embodiment of the present disclosure, the external electrode 130' may further include plating layers 132 and 133 disposed on the conductive resin layer 134.

The plating layers 132 and 133 may serve to improve mounting characteristics. The type of plating layer is not particularly limited, and the plating layer may be a plating layer including at least one of Ni, Sn, Pd or alloys thereof, or may be formed of a plurality of layers.

As a more specific example of the plating layer, the plating layer may be a Ni plating layer or a Sn plating layer, may have a shape in which the Ni plating layer 132 and the Sn plating layer 133 are sequentially formed on the electrode layer 131, and may have a shape in which the Sn plating layer, the Ni plating layer, and the Sn plating layer may be sequentially formed thereon. Furthermore, the plating layer may include a plurality of Ni plating layers and/or a plurality of Sn plating layers.

According to some example embodiments, the external electrode 130' may further include plating layers 132 and 133 on which the conductive resin layer 134 is disposed to significantly improve moisture resistance reliability, flexural strength characteristics, ESR characteristics, and thermal stability of the multilayer electronic component 100' simultaneously with ensuring airtightness and mountability.

### <EXAMPLE>

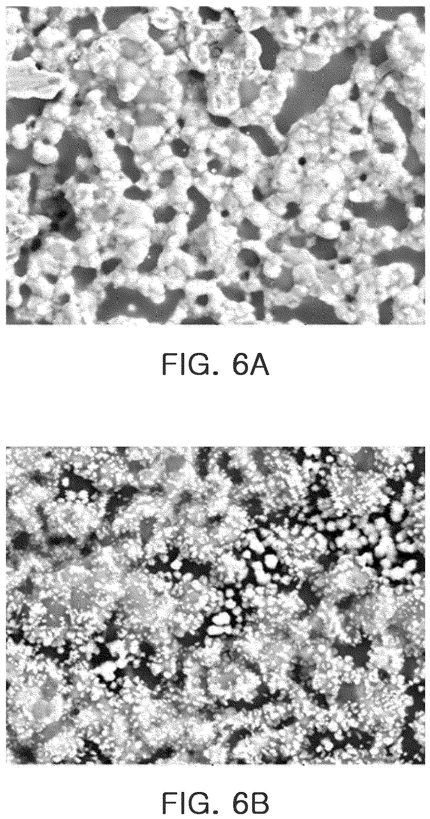

FIG. 6A is an image obtained by capturing an image of a surface of an electrode layer in a multilayer electronic component according to Comparative Example with a scanning electron microscope (SEM), and FIG. 6B is an image obtained by capturing an image of a surface of an electrode layer in a multilayer electronic component according to Inventive Example with a scanning electron microscope (SEM).

In the multilayer electronic components according to Comparative Example and Inventive Example, a conductive paste for forming an electrode layer was applied to a sintered body. The conductive paste was prepared by adding glass frit at a mass ratio of less than 0.2 to Cu powder particles (less than 20 wt% of the Cu powder particles), and adding a small amount of a binder. The conductive paste was applied to the sintered body, dried, and then sintered. Comparative Example is a case after sintering the conductive paste, and Inventive Example is a case in which a voltage of 5V or more is applied at a relative humidity of 80% or more at 80 degrees Celsius or more after sintering the paste.

Referring to FIGS. 6A and 6B, it may be found that FIG. 6B which is an image obtained by capturing an external surface of an electrode layer in the multilayer electronic component according to the Inventive Example with a scanning electron microscope (SEM) has higher surface roughness of the electrode layer that that of FIG. 6A which is an image obtained by capturing an external surface of the electrode layer in the multilayer electronic component according to the Comparative Example with the scanning electron microscope (SEM). Furthermore, unlike in FIG. 6A, in FIG. 6B, it may be found that an oxide including Cu is formed not only to cover at least a portion of Cu exposed on the external surface of the electrode layer, but also to cover at least a portion of the glass exposed to the external surface (a dark portion of a light and shade area).

In the case of an example embodiment of the present disclosure, as illustrated in FIG. 6B, since the oxide including Cu is formed not only to cover at least a portion of the Cu exposed on the external surface of the electrode layer, but also to cover at least a portion of the glass exposed to the external surface (the dark portion of the light and shade area), it may be possible to suppress an incomplete formation of the plating layer 132, which may occur when the plating layer 132 is formed on the electrode layer 131 including Cu and glass, and to improve the airtightness and moisture resistance reliability of the multilayer electronic component 100.

Furthermore, when the conductive resin layer 134 is formed on the electrode layer 131 as in another example embodiment of the present disclosure, a contact area between the electrode layer 131 and the conductive resin layer 134 may be increased to improve the interlayer adhesive force of the external electrodes 130', thereby improving mechanical strength of the multilayer electronic component 100', and ESR characteristics of the multilayer electronic component 100' may be improved by improving electrical conductivity of the external electrode 130'.

Although examples embodiment of the present disclosure has been described in detail above, the present disclosure is not limited to the above-described embodiments and the accompanying drawings but is defined by the appended claims. Therefore, those of ordinary skill in the art may make various replacements, modifications, or changes without departing from the scope of the present disclosure defined by the appended claims, and these replacements, modifications, or changes should be construed as being included in the scope of the present disclosure.

In addition, the expression 'an example embodiment' used in the present disclosure does not denote the same example embodiment, and is provided to emphasize and explain different unique characteristics. However, the example embodiments presented above do not preclude being implemented in combination with the features of another embodiment. For example, although items described in a specific embodiment are not described in another embodiment, the items may be understood as a description related to another embodiment unless a description opposite or contradictory to the items is in another embodiment.

The terms used in the present disclosure are used only to describe an example embodiment and are not intended to limit the present disclosure. In this case, a singular expression includes plural expressions unless the context clearly indicates otherwise.

## Claims

1. A multilayer electronic component comprising:
a body including a dielectric layer and an internal electrode alternately disposed with the dielectric layer therebetween; and
an external electrode disposed on the body,
wherein the external electrode includes an electrode layer disposed on the body and connected to an internal electrode and including Cu and glass, and an upper electrode layer disposed on the electrode layer,
at least a portion of Cu and at least a portion of the glass are disposed adjacent to the upper electrode layer, and
an oxide including Cu is disposed on at least the portion of Cu and the at least the portion of the glass disposed adjacent to the upper electrode layer.

2. The multilayer electronic component according the claim 1, the upper electrode layer is a plating layer.

3. The multilayer electronic component according to claim 2, wherein the oxide including Cu is disposed in a form of particles.

4. The multilayer electronic component according to claim 2, wherein an atom ratio of an oxygen element with respect to a total content of a Cu element in the oxide including Cu is 30 at% or more and 40 at% or less.

5. The multilayer electronic component according to claim 2, wherein an average value of a maximum Feret diameter of the oxide including Cu is 100 nm or more and 2000 nm or less.

6. The multilayer electronic component according to claim 2, wherein the electrode layer further includes an oxide including Fe.

7. The multilayer electronic component according to claim 2, wherein the electrode layer further includes Mg.

8. The multilayer electronic component according the claim 1, the upper electrode layer is a conductive resin layer.

9. The multilayer electronic component according to claim 8, wherein the oxide including Cu is disposed in a form of particles.

10. The multilayer electronic component according to claim 8, wherein an atom ratio of an oxygen element with respect to a total content of a Cu element in the oxide including Cu is 30 at% or more and 40 at% or less.

11. The multilayer electronic component according to claim 8, wherein an average value of a maximum Feret diameter of particles including the Cu is 100 nm or more and 2000 nm or less.

12. The multilayer electronic component according to claim 8, wherein the electrode layer further includes an oxide including Fe.

13. The multilayer electronic component according to claim 8, wherein the electrode layer further includes Mg.

14. The multilayer electronic component according to claim 8, wherein the external electrode further includes a plating layer disposed on the conductive resin layer.

15. The multilayer electronic component according to claim 8, wherein the conductive resin layer includes a conductive metal and a thermosetting resin.
